# EUROPÄISCHE PATENTSCHRIFT

(11) **EP 0 726 388 B1**
(45) Veröffentlichungstag und Bekanntmachung des Hinweises auf die Patenterteilung: **15.07.1998**
(21) Anmeldenummer: 96101331.5
(22) Anmeldetag: 31.01.1996
(51) Int. Cl.: F02D 9/10, F02B 31/08

(54) **Ansaugsystem**
Intake system
Dispositif d'admission

(30) Priorität: 10.02.1995 DE 19504382
(43) Veröffentlichungstag der Anmeldung: 14.08.1996
(73) Patentinhaber: FILTERWERK MANN & HUMMEL GMBH, 71631 Ludwigsburg (DE)
(72) Erfinder: Ernst, Volker, D-74343 Sachsenheim (DE); Leipelt, Rudolf, D-71672 Marbach (DE)
(74) Vertreter: Voth, Gerhard, Dipl.-Ing.

(56) Entgegenhaltungen:
- EP-A- 0 110 077
- EP-A- 0 137 394
- EP-A- 0 544 978
- EP-A- 0 640 754
- WO-A-87/05965
- WO-A-91/13245
- DE-A- 3 833 846
- DE-A- 3 836 550
- DE-A- 4 017 066
- DE-A- 4 329 522
- FR-A- 2 210 720
- US-A- 2 105 343
- US-A- 4 317 438
- US-A- 4 860 706
- PATENT ABSTRACTS OF JAPAN vol. 11 no. 39 (M-559) [2486] ,5.Februar 1987 & JP-A-61 205327 (NISSAN) 11.September 1986,

## Beschreibung

Die Erfindung betrifft ein Ansaugsystem für eine Brennkraftmaschine nach dem Oberbegriff des Hauptanspruchs. Ein solches Ansaugsystem ist beispielsweise aus der EP 05 44 978 A1 bekannt. Bei diesem ist zwischen dem Ansaugrohr und dem Motorblock einer Brennkraftmaschine ein Flanschteil eingefügt. Dieses Flanschteil enthält Klappenventile, die den zweiten Einlaßkanal jedes Zylinders freigeben oder sperren. Eine solche Einrichtung dient dazu, insbesondere bei Magermixmotoren für eine bessere Verwirbelung der zugeführten Ansauggase im unteren Drehzahlbereich zu sorgen.

Diese Einrichtung erfordert einen hohen Fertigungs- und Montageaufwand.

Die DE A 38 36 550 offenbart ein Ansaugsystem für eine Mehrzylinderbrennkraftmaschine mit einem ersten und einen zweiten Einlaßkanal für jeden Zylinder sowie einer Klappenanordnung zum Verschließen des zweiten Einlaßkanals und eine Steuereinrichtung für die Klappenanordnung. Ein Nachteil dieser Klappenanordnung besteht jedoch darin, daß durch den recht einfachen Aufbau ein zuverlässiges Abdichten und ein zuverlässiges Verschließen des zweiten Einlaßkanals nicht gewährleistet ist. Dadurch entsteht ein undefinierter Zustand, der sich nachteilig auf das Laufverhalten bzw. die Laufkonstanz einer Mehrzylinderbrennkraftmaschine auswirkt. Außerdem ist der Montageaufwand nicht unerheblich, da beim Befestigen des Ansaugsystems an der Brennkraftmaschine die Klappenanordnung als zusätzliches Bauteil im Befestigungsbereich manuell fixiert werden muß.

Die Aufgabe der vorliegenden Erfindung liegt darin, ein Ansaugsystem zu schaffen, welches kostengünstig herstellbar ist und den Montageaufwand minimiert.

Diese Aufgabe wird ausgehend von dem Oberbegriff des Hauptanspruchs durch dessen kennzeichnenden Merkmale gelöst.

Der Kemgedanke der Erfindung liegt in der Schaffung einer Klappenanordnung, die geeignet ist, in das Ansaugsystem integriert zu werden. Dabei ist darauf zu achten, daß der Flanschbereich, welcher die Dichtungen für die Abdichtung des Ansaugsystems zu dem Motorblock trägt, nicht verändert wird.

Dieses System ist generell dort anwendbar, wo mittels einer Schaltwelle eine Mehrzahl von Schaltklappen betätigt werden müssen.

Die Erfindung zeichnet sich dadurch aus, daß durch eine entsprechende Gestaltung des Flanschbereichs, d. h. durch die Schaffung einer integrierten Lagerung sich die Klappenanordnung in dem Ansaugsystem befindet, so daß eine Beeinträchtigung der Flanschfunktion bzw. der Befestigungsfunktion verhindert wird. Erfindungsgemäß besteht die Klappenanordnung aus einer Schaltwelle mit darauf angeordneten Klappenventilen und einem Lagerrahmen.

Der Lagerrahmen dient dazu, die in das Ansaugsystem integrierte Klappenanordnung auf der Flanschseite abzustützen.

In einer Weiterbildung der Erfindung wird vorgeschlagen, die Klappenventile seitlich verschiebbar auf der Schaltwelle zu befestigen. Dies hat den Vorteil, daß Toleranzen aufgrund von Wärmedehnung oder auch Fertigungstoleranzen nicht zu einem Verklemmen der Klappenventile in dem jeweiligen Einlaßkanal führen. Jede Klappe paßt sich damit optimal an die Lage des Einlaßkanals an.

Die Lagerung der Schaltwelle erfolgt zweckmäßigerweise dadurch, daß der flanschseitige Teil des Ansaugsystems eine erste Halbschale für die Schaltwelle bildet und an dem Lagerrahmen die weiteren Halbschalen angeformt sind. Zusätzliche Lagerelemente wie Gleitlager o. ä. sind üblicherweise nicht erforderlich. Sie können jedoch aufgrund entsprechender Gestaltung der Halbschalen problemlos eingefügt werden.

Weiterbildungsgemäß weist die Schaltwelle im Bereich der Klappenventile eine Auskragung auf. Diese Auskragung (Kurbelwelle) dient zur Abstützung des Klappenventils bzw. zur übertragung der Drehbewegung der Schaltwelle auf das Klappenventil. Alternativ zu der Auskragung kann die Schaltwelle im Bereich der Klappenventile abgeflacht sein. Auch diese Abflachung ermöglicht die Übertragung der Drehbewegung der Schaltwelle auf das Klappenventil.Da es sich bei den Klappenventilen üblicherweise um Kunststoffteile handelt, können diese an der Schaltwelle mittels einer Rasteinrichtung befestigt werden. Diese Befestigungsform ist montagefreundlich und störunanfällig.

Die Abdichtung des Ansaugsystems zu dem Motorblock erfolgt - wie bereits erwähnt - über eine geeignete Dichtung. Diese Dichtung kann gleichzeitig die Abdichtung zwischen dem Flanschbereich des Ansaugsystems und dem Lagerrahmen vornehmen. Damit sind keine zusätzlichen Dichtelemente für den Lagerrahmen erforderlich.

Zur Positionierung der Schaltwelle in axialer Richtung liegt diese einseitig an einem Anschlag an. Auf der gegenüberliegenden Seite ist der Lagerrahmen mit einem Federlement ausgestattet. Dieses Federelement hat die Aufgabe, die Schaltwelle in der Sollposition zu halten.

Die Schaltwelle ist zweckmäßigerweise aus einem metallischen Werkstoff wie beispielsweise Stahldraht hergestellt. Zum zuverlässigen Schließen der zweiten Kanäle mittels der Klappenventile wird die Torsionsfederwirkung der Schaltwelle genutzt. Die einzelnen Klappenventile weisen, längs der Schaltwelle gesehen, einen geringen Winkelversatz zueinander auf. Dieser Winkelversatz führt dazu, daß das von dem Schaltorgan am weitest entfernt liegende Klappenventil zuerst geschlossen wird und nacheinander beim weiteren Bewegen der Schaltwelle über das Schaltorgan die nachfolgenden Klappenventile ebenfalls nacheinander schließen. Damit ist gewährleistet, daß jedes Klappenventil an dem Anschlag anliegt und durch die Motorvibrationen keine Klappenschwingungen in der Endstellung zu befürchten sind.

Aufgrund des kleinen Wellendurchmessers ist diese elastisch genug, um auch bei eventuell zueinander nicht fluchtenden Lagerstellen einen Fluchtfehler auszugleichen. Ein weiterer Vorteil des geringen Wellendurchmessers sind die kleinen Leckverluste im Bereich der Lagerstellen zwischen den Ansaugkanälen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein können.

Die Erfindung wird nachfolgend anhand von Ausführungsbeispielen näher erläutert. Es zeigt
- Figur 1: eine Prinzipdarstellung eines Ansaugsystems mit zwei Einlaßkanälen,
- Figur 2: eine Schnittdarstellung eines Ansaugsystems im Bereich der Klappenventilanordnung,
- Figur 3: eine Schnittdarstellung eines Klappenventils,
- Figur 4: eine Darstellung der Befestigungsvariante eines Klappenventils.

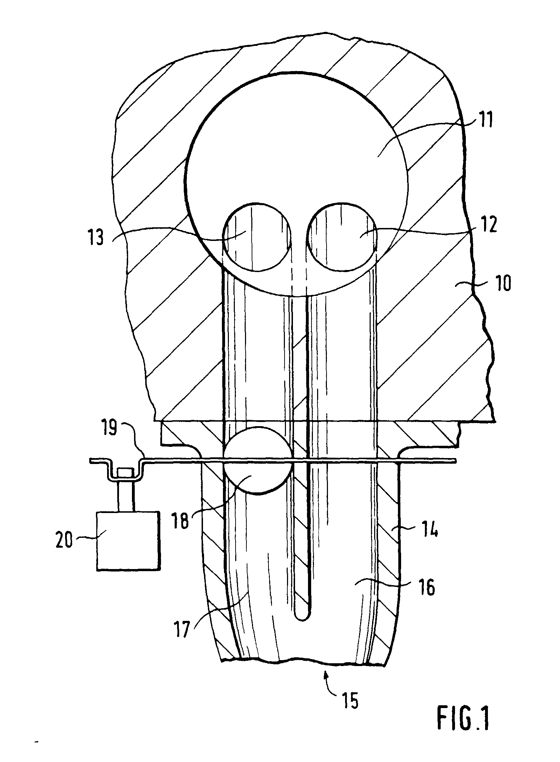

Die Prinzipdarstellung gemäß Figur 1 zeigt einen Ausschnitt eines Zylinderkopfs 10 mit einem Hubraum 11 und zwei Einlaßöffnungen 12, 13. Am Motorblock 10 ist ein Ansaugsystem 14 angeflanscht. Dieses Ansaugsystem weist einen Ansaugkanal 15 auf, der sich in die Ansaugkanäle 16, 17 aufteilt. Der Ansaugkanal 17 ist mit einem Klappenventil 18 versehen. Dieses Klappenventil ist auf einer Schaltwelle 19 befestigt, die von einer Antriebseinheit 20 steuerbar ist. Zur Leistungsverbesserung, insbesondere im unteren Drehzahlbereich eines Magermixmotors, ist das Klappenventil 18 geschlossen, im oberen Drehzahlbereich wird dieses in die hier gezeigte Offenstellung gekippt.

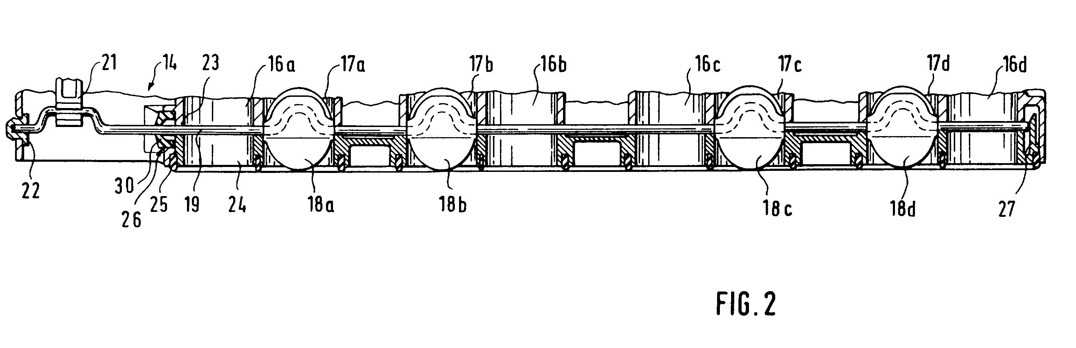

In Figur 2 ist in einer Schnittdarstellung ein Ansaugsystem im Bereich der Klappenventilanordnung gezeigt. Der Flanschbereich des Ansaugsystems 14 weist die ersten Ansaugkanäle 16a bis 16d auf sowie die zweiten Ansaugkanäle 17a bis 17d. In den Ansaugkanälen 17a - 17d sind die Klappenventile 18a - 18d angeordnet. Diese sind mit einer Schaltwelle 19 verbunden. Die Schaltwelle ist linksseitig über einen Hebel 21 mit der hier nicht dargestellten Antriebseinheit gekoppelt. Zur Lagerung der Schaltwelle 19 ist linksseitig an dem Ansaugsystem 14 eine Lagerbuchse 22 vorgesehen. Außerdem liegt die Schaltwelle auf entsprechend gestalteten Lagerhälften 23 auf, die an jedem Ansaugkanal angeordnet sind.

Zur Fixierung der Schaltwelle 19 und der gesamten Klappenanordnung ist ein Lagerrahmen 24 vorgesehen. Dieser Lagerrahmen liegt an der dem Anschlußflansch zugewandten Seite des Ansaugsystems und ist gleichzeitig mit dem Dichtungssystem 25 bestückt. Dieses Dichtungssystem 25 dichtet sowohl das Ansaugsystem 14 gegenüber dem Zylinderkopf 10 ab als auch den Lagerrahmen 24 gegenüber dem Flanschbereich des Ansaugsystems.

Die Klappenventile 18a - 18d sind an Auskragungen der Schaltwelle 19 angeordnet, wobei die jeweilige Auskragung für die Übertragung der Drehbewegung der Schaltwelle 19 auf die Klappenventile 18a - 18d sorgt.

Bei der Montage des Systems erfolgt zunächst die Montage der Klappenventile 18a - 18d auf die noch außerhalb des Ansaugsystems befindliche Schaltwelle. Anschließend wird die Schaltwelle im linksseitigen Bereich durch die Öffnung 26 eingefädelt, Durch einen von der Antriebsseite her aufgesteckten Dichtring 30 nach außen abgedichtet, in die Lagerbuchse 22 eingesteckt und durch Aufstecken des Lagerrahmens 24 in der dargestellten Lage fixiert. An der rechten Seite des Lagerrahmens 24 befindet sich ein Federelement 27. Dieses sorgt für eine Axialkraft auf die Schaltwelle 19 in Richtung der Lagerbuchse 22, so daß nach dem Einbau der Schaltwelle 19 diese keine Axialbewegungen ausführt.

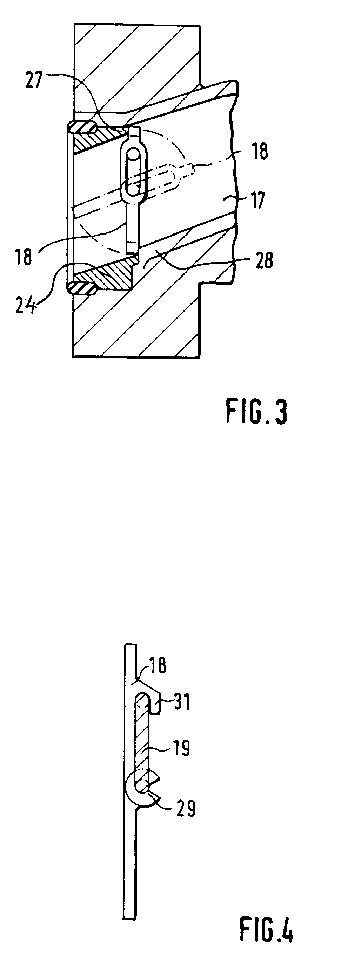

Figur 3 zeigt in einer Schnittdarstellung ein einzelnes Klappenventil 18. In der hier gezeigten Geschlossenstellung liegt dieses Klappenventil am Dichtungsbereich 28 des Ansaugkanals 17 an, sowie am Dichtungsbereich 27 des Lagerrahmens. Zur zuverlässigen Abdichtung kann das aus Kunststoff bestehende Klappenventil im 2K-Spritzgießverfahren hergestellt sein, wobei der Dichtbereich des Klappenventils aus einem Elastomer besteht. Selbstverständlich kann an dem Klappenventil auch eine Lippendichtung angeformt sein.

Die gestrichelt dargestellte Struktur zeigt das Klappenventil 18 in der Offenstellung. Aufgrund der flachen Bauweise setzt dieses den Gasstrom nur eine geringe Widerstandfläche entgegen. Wie hier gezeigt, besteht das Klappenventil 18 aus zwei Halbschalen, die miteinander verschweißt oder verklebt sind und zwischen denen die Schaltwelle 19 axial verschiebbar eingebettet ist.

In Figur 4 ist eine Befestigungsvariante für ein Klappenventil gezeigt. Das Klappenventil 18 ist hier einteilig ausgeführt und besitzt ein teilweise offenes Auge 29 und eine Lasche 31. Die Schaltwelle 19 wird in die Lasche eingeschoben und im offenen Auge 29 eingeschnappt. Auch diese Befestigung ist montagefreundlich und stellt eine zuverlässige Verbindungsmethode dar.

Selbstverständlich sind weitere Varianten denkbar, wie z. B. die Abflachung der Schaltwelle und eine Befestigung des Klappenventils mittels dieser Abflachung durch Verwendung von zwei Halbschalen oder durch Verwendung eines Schnappverschlusses.

### Bezugszeichenliste

- 10: Zylinderkopf
- 11: Hubraum
- 12: Einlaßöffnung
- 13: Einlaßöffnung
- 14: Ansaugsystem
- 15: Ansaugkanal
- 16: Ansaugkanal
- 17: Ansaugkanal
- 18: Klappenventil
- 19: Schaltwelle
- 20: Antriebseinheit
- 21: Hebel
- 22: Lagerbuchse
- 23: Halbschale
- 24: Lagerrahmen
- 25: Dichtungssystem
- 26: Öffnung
- 27: Dichtungsbereich
- 28: Dichtungsbereich
- 29: Auge
- 30: Dichtring
- 31: Lasche

## Patentansprüche

1. Ansaugsystem für eine Mehrzylinder-Brennkraftmaschine mit einem ersten Einlaßkanal (16), einem zweiten Einlaßkanal (17) für jeden Zylinder, einer Klappenanordnung (18, 19,) zum Verschließen des zweiten Einlaßkanals (17) und einer Steuereinrichtung (20) für die Klappenanordnung (18, 19), wobei die Klappenanordnung (18, 19) in den Flanschbereich des Ansaugsystems (14) integriert ist, wobei die Klappenanordnung aus einer Schaltwelle (19) und darauf angeordneten Klappenventilen (18) besteht, dadurch gekennzeichnet, daß die Klappenanordnung auch einen Lagerrahmen (24) aufweist.

2. Ansaugsystem nach Anspruch 1, dadurch gekennzeichnet, daß die Klappenventile (18) unabhängig voneinander seitlich verschiebbar auf der Schaltwelle (19) befestigt sind.

3. Ansaugsystem nach einem der vorherigen Ansprüche, dadurch gekennzeichnet, daß der flanschseitige Teil des Ansaugsystem (14) eine Halbschale (23) für die Lagerung der Schaltwelle (19) bildet und in dem Lagerrahmen (24) die weitere Halbschale der Schaltwelle (19) angeformt ist.

4. Ansaugsystem nach einem der vorherigen Ansprüche, dadurch gekennzeichnet, daß die Schaltwelle (19) im Bereich der Klappenventile (18) eine Auskragung aufweist und sich die Klappenventile an dieser Auskragung abstützen, zur Drehmomentübertragung von der Welle auf die Klappenventile.

5. Ansaugsystem nach einem der vorherigen Ansprüche, dadurch gekennzeichnet, daß die Schaltwelle (19) im Bereich der Klappenventile (18) abgeflacht ist und sich die Klappenventile an dieser Abflachung abstützen.

6. Ansaugsystem nach einem der vorherigen Ansprüche, dadurch gekennzeichnet, daß die Klappenventile (18) an der Schaltwelle (19) mittels einer Rasteinrichtung (29, 31) befestigt sind.

7. Ansaugsystem nach einem der vorherigen Ansprüche, dadurch gekennzeichnet, daß zwischen Lagerrahmen (24) und Flanschbereich eine Dichtung (25) vorgesehen ist, die sowohl den Lagerrahmen (24) im Flanschbereich abdichtet als auch den Flanschbereich zu dem Einlaßbereich des Motors.

8. Ansaugsystem nach einem der vorherigen Ansprüche, dadurch gekennzeichnet, daß der Lagerrahmen (24) mit einem federnden Element (27) versehen ist, wobei das fedemde Element (27) eine axial gerichtete Kraft auf die Schaltwelle (19) ausübt zur spielfreien Lagerung der Schaltwelle (19) in axialer Richtung.

9. Ansaugsystem nach einem der vorherigen Ansprüche, dadurch gekennzeichnet, daß die einzelnen Klappenventile (18) zueinander einen Winkelversatz aufweisen und die Schaltwelle (19) als Torsionsfeder ausgebildet ist.

10. Ansaugsystem nach einem der vorherigen Ansprüche, dadurch gekennzeichnet, daß an dem Flanschbereich und/oder dem Lagerrahmen (24) ein Anschlag (27, 28) für das jeweilige Klappenventil vorgesehen ist.

## Claims

1. Induction system for a multi-cylinder internal combustion engine, having a first induction port (16), a second induction port (17) for each cylinder, a flap arrangement (18, 19) for closing the second induction port (17), and a control means (20) for controlling the flap arrangement (18, 19), the flap arrangement (18, 19) being incorporated in the flange region of the induction system (14), the flap arrangement comprising a control shaft (19) and flap valves (18) disposed thereon, characterised in that the flap arrangement also includes a bearing frame (24).

2. Induction system according to claim 1, characterised in that the flap valves (18) are mounted on the control shaft (19) so as to be laterally displaceable independently of one another.

3. Induction system according to one of the preceding claims, characterised in that the part of the induction system (14) adjacent the flange forms a half-shell (23) for the mounting of the control shaft (19), and the additional half-shell of the control shaft (19) is provided in the bearing frame (24).

4. Induction system according to one of the preceding claims, characterised in that the control shaft (19) includes a projection member in the region of the flap valves (18), and the flap valves are supported on this projection member for the transmission of torque from the shaft to the flap valves.

5. Induction system according to one of the preceding claims, characterised in that the control shaft (19) is flattened in the region of the flap valves (18), and the flap valves are supported on this flattened portion.

6. Induction system according to one of the preceding claims, characterised in that the flap valves (18) are mounted on the control shaft (19) by means of a locking means (29, 31).

7. Induction system according to one of the preceding claims, characterised in that a seal (25) is provided between the bearing frame (24) and the flange region, said seal sealing both the bearing frame (24) in the flange region and the flange region at the induction region of the engine.

8. Induction system according to one of the preceding claims, characterised in that the bearing frame (24) is provided with a resilient member (27), the resilient member (27) exerting an axially directed force upon the control shaft (19) for the clearance-free mounting of the control shaft (19) in the axial direction.

9. Induction system according to one of the preceding claims, characterised in that the individual flap valves (18) are angularly offset from one another, and the control shaft (19) is configured as a torsion spring.

10. Induction system according to one of the preceding claims, characterised in that a stop member (27, 28) for each respective flap valve is provided at the flange region and/or on the bearing frame (24).

## Revendications

1. Système d'admission pour un moteur à combustion interne à plusieurs cylindres, qui comprend un premier canal d'admission (16), un deuxième canal d'admission (17) pour chaque cylindre, un système de clapets (18, 19), qui sert à fermer le deuxième canal d'admission (17) et un dispositif de commande (20) pour le système de clapets (18, 19), le système de clapets (18, 19) étant intégré dans la zone du flasque du système d'admission (14), le système de clapets se composant d'un axe de commande (19) et de papillons (18), disposés dessus,
caractérisé en ce que
le système de clapets présente aussi un cadre de montage (24).

2. Système d'admission selon la revendication 1,
caractérisé en ce que
les papillons (18) sont fixés de façon à pouvoir coulisser latéralement indépendamment les uns des autres sur l'axe de commande (19).

3. Système d'admission selon l'une des revendications précédentes,
caractérisé en ce que
la partie du système d'admission (14), qui est située du côté du flasque, forme une demi-coquille (23) pour le montage de l'axe de commande (19) et l'autre demi-coquille de l'axe de commande (19) est formée dans le cadre de montage (24).

4. Système d'admission selon l'une des revendications précédentes,
caractérisé en ce que
l'axe de commande (19) présente dans la zone des papillons (18) une saillie et en ce que les papillons prennent appui sur cette saillie, pour transmettre le couple de rotation de l'axe aux paillons.

5. Système d'admission selon l'une des revendications précédentes,
caractérisé en ce que
l'axe de commande (19) est aplati dans la zone des papillons (18) et en ce que les papillons prennent appui sur cet aplatissement.

6. Système d'admission selon l'une des revendications précédentes,
caractérisé en ce que
les papillons (18) sont fixés sur l'axe de commande (19) au moyen d'un système d'encliquetage (29, 31).

7. Système d'admission selon l'une des revendications précédentes,
caractérisé en ce qu'
entre le cadre de montage (24) et la zone du flasque il est prévu un joint d'étanchéité (25), qui assure l'étanchéité aussi bien du cadre de montage (24) dans la zone du flasque que de la zone du flasque aussi par rapport à la zone d'admission du moteur.

8. Système d'admission selon l'une des revendications précédentes,
caractérisé en ce que
le cadre de montage (24) est pourvu d'un élément (27), qui fait ressort, l'élément (27), qui fait ressort, exerçant une force dirigée axialement sur l'axe de commande (19) pour obtenir un montage sans jeu de l'axe de commande (19) dans le sens axial.

9. Système d'admission selon l'une des revendications précédentes,
caractérisé en ce que
les différents papillons (18) présentent les uns par rapport aux autres un décalage angulaire et l'axe de commande (19) est constitué sous la forme d'un ressort de torsion.

10. Système d'admission selon l'une des revendications précédentes,
caractérisé en ce que
l'on prévoit sur la zone du flasque et/ou sur le cadre de montage (24) une butée (27, 28) pour le papillon correspondant.
